# EUROPÄISCHE PATENTSCHRIFT

(11) **EP 3 099 450 B1**
(45) Veröffentlichungstag und Bekanntmachung des Hinweises auf die Patenterteilung: **25.12.2019**
(21) Anmeldenummer: 15703546.0
(22) Anmeldetag: 30.01.2015
(51) Int. Cl.: B25J 5/00, G21C 17/013, G21C 19/20

(54) **VORRICHTUNG MIT EINER MANIPULATOREINHEIT**
DEVICE WITH A MANIPULATOR UNIT
DISPOSITIF ÉQUIPÉ D'UNE UNITÉ DE MANIPULATION

(30) Priorität: 30.01.2014 DE 102014001074
(43) Veröffentlichungstag der Anmeldung: 07.12.2016
(73) Patentinhaber: Wälischmiller Engineering GmbH, 88677 Markdorf (DE)
(72) Erfinder: HARA, Kenji, 88709 Meersburg (DE)
(74) Vertreter: Otten, Roth, Dobler & Partner mbB Patentanwälte
(86) Internationale Anmeldenummer: PCT/EP2015/051904
(87) Internationale Veröffentlichungsnummer: WO 2015/114078

(56) Entgegenhaltungen:
- EP-A1- 0 461 506
- JP-A- S60 201 250
- JP-A- 2005 300 266
- JP-A- 2005 324 327
- KR-A- 20050 017 724
- US-A- 4 165 254
- US-A- 4 883 184

## Beschreibung

### Stand der Technik

Vorrichtungen mit einer Manipulatoreinheit bzw.

Manipulatorsysteme werden für eine Vielzahl unterschiedlicher Aufgaben eingesetzt. In der Regel geht es dabei um ferngesteuerte Aktionen, welche von Personen nicht unmittelbar vor Ort vorgenommen werden können, insbesondere aufgrund von Gefahren für die Personen beim Arbeiten bzw. wegen der Unzugänglichkeit des Einsatzortes für die agierende Person und/oder anderen dort lokal herrschenden Risiken. Solche Szenarien treten zum Beispiel in der Folge von Katastrophen auf, in Bereichen mit nicht tolerierbarem Gefährdungspotential für das menschliche Leben durch risikobehaftete bzw. lebensfremde Umgebungsbedingungen bei extremen mechanischen, chemischen, oder physikalischen Gefahrenpotentialen z. B. durch Einsturzgefahren, Giftstoffe, extreme Temperaturen oder Drücke und/oder kritische radioaktive Strahlungswerte.

Das Dokument US 4,883,184 A offenbart eine Vorrichtung mit einer Manipulatoreinheit gemäß dem Oberbegriff des unabhängigen Anspruchs.

### Aufgabe und Vorteile der Erfindung

Aufgabe der vorliegenden Erfindung ist es, eine einleitend genannte Vorrichtung vorteilhaft bereitzustellen, welche für eine Vielzahl von vergleichsweise komplexen Aufgaben insbesondere kompakt ausgebildet und variabel einsetzbar sind. Diese Aufgabe wird durch den unabhängigen Anspruch gelöst.

Die abhängigen Ansprüche betreffen vorteilhafte Varianten der Erfindung.

Die Erfindung geht aus von einer Vorrichtung mit einer Manipulatoreinheit, welche einen antreibbaren Manipulatorarm an einem Grundkörper der Manipulatoreinheit umfasst. Der Manipulatorarm ist zum Beispiel ferngesteuert komplex beweglich und für unterschiedliche Arbeiten individuell ausrüstbar. Am Manipulatorarm können unterschiedliche Funktionalitäten realisiert werden, zum Beispiel durch austauschbar daran vorhandene angetrieben arbeitende Werkzeuge.

Gemäß der Erfindung ist eine Hubanordnung mit mehreren separaten flexiblen Zugelementen vorhanden, an welcher die Manipulatoreinheit frei anhängend absenkbar und/oder anhebbar ist, wobei zwischen den flexiblen Zugelementen und dem Grundkörper der Manipulatoreinheit wirkende Koppelmittel derart vorhanden sind, dass im angehängten Zustand der Manipulatoreinheit an den Zugelementen der Grundkörper verstellbar ist, um eine vordefinierte räumliche Ausrichtung des Grundkörpers einzustellen. Der Grundkörper ist im angehängten Zustand der Manipulatoreinheit an den Zugelementen insbesondere linear und/oder um eine Achse schwenkend verstellbar.

Der Kern der Erfindung liegt darin, dass eine Hauptebene der Manipulatoreinheit von einer vertikalen Ausrichtung in eine horizontale Ausrichtung durch eine Kippbewegung kippbar ist, wobei die Hauptebene eine Flächenseite des Grundkörpers ist.

Damit wird eine insgesamt vergleichsweise kompakte und variabel einsetzbare Vorrichtung mit einer Manipulatoreinheit bereitgestellt, welche ein vergleichsweise geringes Gewicht aufweist.

Mit der erfindungsgemäßen Vorrichtung können selbst unter schwierigsten Bedingungen aus sicherer Distanz zum Einsatzbereich der Manipulatoreinheit Arbeiten von der kontrollierbar arbeitenden Manipulatoreinheit ausgeführt werden. Der Einsatz der Vorrichtung ist insbesondere z. B. bei räumlich schwierigem Zugang zum Einsatzbereich, bei beengten Verhältnissen bzw. bei hoch risikobehafteten Bedingungen vor Ort vorteilhaft.

Dies ist beispielsweise zur Katastrophenhilfe vorteilhaft. Die Vorrichtung umfasst neben der Hubanordnung die

Manipulatoreinheit, zu der eine insbesondere leitungsgebundene Energie- und/oder Signalversorgung und die Koppelmittel gehören. Der Manipulatorarm und weitere Elemente der Manipulatoreinheit werden weiter unten noch erläutert. Zur visuellen Erfassung des Umfelds der Manipulatoreinheit und zur Weiterleitung entsprechender Bildinformationen weist die Manipulatoreinheit ein bildgebendes System bzw. eine Kamera auf.

Die Hubanordnung, welche zur Bewegung der Manipulatoreinheit in vertikaler Richtung dient und einfach bzw. mit einem geringen Gewicht aufgebaut ist, lässt sich die Manipulatoreinheit vertikal bewegen bzw. anheben und absenken und zusätzlich in einem gewissen Maß quer dazu bewegen.

Vorteilhaft kann die Querbewegung der Manipulatoreinheit sowohl im gespannten als auch im nicht gespannten Zustand der Zugelemente realisiert werden. Im gespannten Zustand der Zugelemente kann die Manipulatoreinheit jederzeit gleichzeitig zur Querbewegung vertikal fixiert, abgesenkt oder angehoben werden, was vorteilhaft eine präzise und situationsangepasste Arbeitsweise der Manipulatoreinheit ermöglicht.

Die Hubanordnung umfasst je nach aufzunehmenden Kräften mehrere separate flexible Zugelemente. Die mehreren Zugelemente sind vorteilhaft gleichartig aufgebaut und zueinander parallel ausgerichtet, was in der horizontalen wenig Raum benötigt und die Hubanordnung und deren Betrieb vereinfacht.

Als Zugelement kommt beispielsweise ein Stahl- oder Gewebematerial in Zylinder- bzw. Seilform, eine Kette oder ein hochfestes flexibles Band in Frage.

Außerdem weist die Hubanordnung vorteilhaft eine Anordnung zum motorischen Verkürzen und Verlängern eines frei hängenden Zugelement-Anteils auf, um abhängig von der Länge des vertikal gestreckt hängenden Zugelements die vertikale Position der Manipulatoreinheit zu verändern. Die Hubanordnung weist zum Beispiel eine Wickelvorrichtung für die Zugelemente wie eine Seiltrommel oder dergleichen auf. Darüber hinaus ist es vorteilhaft, wenn die Hubanordnung selbst in ihrer räumlichen Position veränderbar ist, zum Beispiel linear bzw. horizontal verfahrbar ist.

Die Zugelemente können ggf. mit der zusätzlichen Funktion zur Energie- und/oder Signalversorgung der Manipulatoreinheit von außen ausgebildet sein. In der Regel wird die Energie- und/oder Signalversorgung der Manipulatoreinheit jedoch über wenigstens ein zum Zugelement separates längliches biegsames Element wie ein Energie- und Signalkabel eingerichtet. Das Energie- und Signalkabel kann abhängig von der vertikalen Position der Manipulatoreinheit ebenfalls von der Hubanordnung nach oben gezogen bzw. nach unten abgelassen werden. Mit der vergleichsweise kompakten bzw. schlanken und materialsparend ausgestalteten erfindungsgemäßen Vorrichtungen lassen sich auch Stellen erreichen, die nur über einen schwierigen z. B. beengten und/oder von Hindernissen teils verstellten Zugang von oben verfügen, welche z. B. 20 Meter, 30 Meter, 40 Meter oder tiefer liegen als der von außen erreichbare Zugang oberhalb des Einsatzbereiches.

Im angehängten Zustand der Manipulatoreinheit, insbesondere wenn die Manipulatoreinheit frei schwebend allein über die Zugelemente aufgenommen ist, ist der Grundkörper der Manipulatoreinheit in seiner räumlichen Ausrichtung verstellbar. Die Manipulatoreinheit kann dabei im umgebenden Gas- oder Flüssigkeitsmedium kontaktfrei von umgebenden festen Körpern wie Wänden oder einem Bodenabschnitt sein. Der Grundkörper der Manipulatoreinheit kann aus einer ersten vordefinierten räumlichen Ausrichtung in eine vorgebbare zweite räumliche Ausrichtung verstellt und auch wieder zurückverstellt werden. Gegebenfalls können die Koppelmittel derart gestaltet sein, dass weitere vorgebbare räumliche Ausrichtungen des Grundkörpers eingestellt werden können. So kann ein situations- bzw. umgebungsangepasstes Arbeiten der Manipulatoreinheit realisiert werden. Der Grundkörper kann ggf. um eine Achse verschwenkt bzw. verkippt werden, zum Beispiel um maximal bis 360 Winkelgrade oder insbesondere um maximal ca. 90 Winkelgrade. Die Verstellmittel können eine Verstellung des Grundkörpers um eine erste Achse und zusätzlich um eine zur ersten Achse quer gerichtete zweite Achse ermöglichen.

Vorteilhaft ist ein den Koppelmitteln zugehöriger Abschnitt der Manipulatoreinheit vorgesehen, der zwischen den Zugelementen und dem Grundkörper vorhanden ist und welcher bei der Verstellung des Grundkörpers selbst nicht verstellt wird, z. B. ein starres Koppelelement der Koppelmittel.

Die Koppelmittel sind insbesondere derart ausgebildet, dass die Verstellung im Zustand der unter der Masse der daran hängenden Manipulatoreinheit straff gespannten, zugbelasteten Zugelemente möglich ist. Dies ist vorteilhaft, da die Verstellung des Grundkörpers von einem entfernten Ort von außen häufig ohne jegliche Abstützung der Manipulatoreinheit zum Beispiel an einem Wand- oder einem Bodenabschnitt in der nahen Umgebung der Manipulatoreinheit möglich sein muss.

Gemäß der Erfindung ist eine Hauptebene der Manipulatoreinheit von einer vertikalen Ausrichtung in eine horizontale Ausrichtung durch eine Kippbewegung kippbar. Die Koppelmittel sind derart gestaltet, dass die Verkippung insbes. aus einer zumindest angenäherten vertikalen Ausrichtung der Hauptebene in eine zumindest angenähert horizontale Ausrichtung erfolgt. Die Verkippung kann in genau eine Kipprichtung oder in beide möglichen Kipprichtungen um die Kippachse erfolgen. Die Hauptebene ist eine Flächenseite des Grundkörpers der Manipulatoreinheit zum Beispiel eine Ober- oder Unterseite des Grundkörpers. Die Hauptebene kann beispielsweise durch einen Teil einer Außenseite eines Gehäuses des Grundkörpers gebildet sein. Die Hauptebene kann flach oder eine mit Erhöhungen und/oder Vertiefungen versehene Seite des Grundkörpers der Manipulatoreinheit sein.

Der Grundkörper der Manipulatoreinheit kann insbesondere eine kastenartige oder platten- bzw. quaderförmige Grundform aufweisen, mit einer zum Beispiel vier- oder mehreckigen Grundfläche, insbesondere mit einer entsprechenden Gehäuseform. Im und/oder am Gehäuse des Grundkörpers sind neben dem Manipulatorarm in der Regel weitere wesentliche Elemente der Manipulatoreinheit wie beispielsweise Motoren, Getriebe, Kupplungen, Leitungen und dergleichen angeordnet. Der Grundkörper kann vorteilhaft derart verstellt werden, dass die Manipulatoreinheit z. B. bei vertikal ausgerichteter Hauptebene des Grundkörpers eine kompakte Außengestalt aufweist, so dass ein maximales Außenmaß der Manipulatoreinheit in horizontaler Richtung bei frei hängender Manipulatoreinheit zum Beispiel unter einem Meter betragen kann. So kann die erfindungsgemäße Vorrichtung vorteilhaft für Anwendungen genutzt werden, bei welchen ein Zugang zum Einsatzort von oben ein freies Öffnungsmaß von unter einem Meter aufweist. Die Manipulatoreinheit kann durch Öffnungen herabgelassen werden, welche eine längliche schmale Form z. B. eine Spaltform aufweisen, da die Manipulatoreinheit bei vertikal ausgerichteter Hauptebene des Grundkörpers selbst eine schmale längliche Form aufweist.

Eine vorteilhafte Ausgestaltung der erfindungsgemäßen Vorrichtung in einer Konfiguration für nahezu jegliche kritischen Einsätze weist, bezogen auf einen kompakten Zustand mit eingeklapptem Manipulatorarm und ggf. weiteren eingeklappten bewegbaren Gliedern am Grundkörper, z. B. folgende typische Abmaßebereiche der Manipulatoreinheit auf: beispielsweise maximal ca. 2000 bis 3000 Millimeter in der Vertikalen bzw. in der Höhe inklusiv der Koppelmittel, beispielsweise maximal ca. 600 bis 1000 Millimeter in einer ersten horizontalen Breite und beispielsweise maximal ca. 1800 bis 2200 Millimeter in einer zweiten horizontale Breite gemessen quer zur ersten horizontalen Breite.

Weiter wird vorgeschlagen, dass die Koppelmittel ein mit den Zugelementen verbundenes zumindest im Wesentlichen starres Koppelelement umfassen. Das starre Koppelelement ist allein oder unter Zwischenschaltung eines z. B. gekapselten Zwischenabschnitts mit den Zugelementen verbunden. Das Koppelelement ist insbesondere länglich beziehungsweise schlank ausgebildet. Im Inneren des Koppelelements können Komponenten untergebracht sein bzw. es kann eine Durchführung einer Signal- und Energieversorgung bis an bzw. in den Grundkörper vorhanden sein.

Das Koppelelement ist insbes. zwischen den Zugelementen und dem Grundkörper positioniert. Am Koppelelement kann der Zwischenabschnitt zum Beispiel oberhalb anschließen. Es ist über dies vorteilhaft, dass die Koppelmittel über eine Verstellanordnung an der Manipulatoreinheit angreifen. Insbesondere umfasst die Verstellanordnung eine Gelenk- bzw. Kippanordnung. Bevorzugt erfolgt die Verstellung mit der Verstellanordnung um eine im Wesentlichen horizontale Achse bezogen auf die frei an den Zugelementen hängende Manipulatoreinheit. Die Verstellanordnung kann ausgebildet sein, dass ein Verstellen durch Schwerkraft unterstützt erfolgt, beispielsweise aufgrund einer bewusst herbeigeführten Verlagerung des Schwerpunkts des Grundkörpers der Manipulatoreinheit. Für die Schwerpunktsverlagerung des Grundkörpers ist in der Regel ein motorischer Antrieb nötig zum Beispiel durch ein Aus- oder Wegklappen eines am Grundkörper außen gelenkig angreifenden Elements wie z. B. des Manipulatorarms oder eines Kontaktgliedes.

Eine vorteilhafte Modifikation des Erfindungsgegenstandes zeichnet sich dadurch aus, dass die Verstellanordnung im Bereich eines Schwerpunkts der Manipulatoreinheit insbesondere im Bereich eines Schwerpunkts des Grundkörpers der Manipulatoreinheit vorhanden ist. Beispielsweise geht eine Kipp- beziehungsweise Gelenkachse einer als Gelenkanordnung ausgestalteten Verstellanordnung durch einen Bereich um den Schwerpunkt der Manipulatoreinheit beziehungsweise des Grundkörpers herum oder geht direkt durch den Schwerpunkt. Vorteilhaft kann eine vergleichsweise geringe Schwerpunktsverlagerung des Grundkörpers aus einer stabilen bzw. ausbalancierten Stellung zu einem auf den Grundkörper wirkenden Kippmoment führen, bezogen auf die Kippachse der Gelenkanordnung.

Weiter wird gemäß einer vorteilhaften Ausgestaltung der Erfindung vorgeschlagen, dass an der Manipulatoreinheit mehrere angetrieben bewegbare Kontaktglieder vorhanden sind. Die Kontaktglieder sind beispielsweise außen vorstehend an dem Grundkörper z. B. symmetrisch verteilt vorhanden. Insbesondere ragen die Kontaktglieder an Schmalseiten des im Wesentlichen plattenförmigen Grundkörpers vor. Jedes Kontaktglied, das beispielsweise mehrere Kontaktglied-Abschnitte aufweist, die über Gelenke verbunden sind, ist jeweils separat antreibbar und damit räumlich bewegbar. Die Bewegung ist über die Kontrolleinheit der Manipulatoreinheit kontrollierbar. Ein Kontaktglied weist insbesondere mehrere gelenkig verbundene Abschnitte auf, wobei eine Bewegung des Kontaktglieds relativ zum Grundkörper der Manipulatoreinheit insbesondere anhand von drei Bewegungsachsen erfolgt. Jede Bewegung der Abschnitte erfolgt motorisch über einen oder mehrere entsprechende Antriebsmotoren der Manipulatoreinheit. Die mehreren Kontaktglieder sind bevorzugt gleichartig ausgestaltet. Mit den Kontaktgliedern kann sich die Manipulatoreinheit auf einem Gegenabschnitt wie beispielsweise einer senkrechten Wand oder einem ebenen oder konturierten Boden abstützen bzw. sicher stehend bzw. im Stillstand positioniert werden. Die mehreren Kontaktglieder sind zudem mittels der Kontrolleinheit derart bewegbar, dass sich die Manipulatoreinheit auf dem Gegenabschnitt sicher und kontrolliert in beliebige Richtungen entlang des Gegenabschnitts fortbewegen kann.

Auch ist es vorteilhaft, dass ein Kontaktglied mit einer Funktionalität ausgebildet ist. Als Funktionalität ist z. B. ein über ein Abstützen oder Anlehnen des Kontaktgliedes an einem Bodenabschnitt, was schwerkraftbedingt nahezu immer möglich ist, hinausgehender Mechanismus zu verstehen. Insbesondere kann eine Funktionalität bewusst am Kontaktglied insbes. am vorderen Ende des Kontaktglieds vorhanden sein. Bevorzugt sind mehrere Funktionalitäten an einem Abschnitt des Kontaktglieds zum Beispiel an einem freien Ende des Kontaktgliedes vorgesehen. Von denen mehreren Funktionalitäten ist zum Beispiel jeweils genau eine auswählbar und nutzbar, solange sind die anderen Funktionalitäten nicht aktiv, können aber jederzeit situationsbedingt ausgewählt werden.

Vorteilhafterweise sind an einem Kontaktglied Haftmittel zur Einrichtung einer Haltefunktion zwischen dem Kontaktglied und einem Gegenabschnitt vorhanden. Die Haftmittel können insbesondere zur lösbaren Anhaftung an einem Gegenabschnitt dienen. Die Haftmittel, welche auch als eine Funktionalität verstanden werden können, wie auch andere Funktionalitäten, können vorteilhaft definiert zum Beispiel von einer Person über z. B. Bedienmittel von einem entfernten Bedienort zu- und abgeschalten bzw. aktiv und passiv gesetzt werden. Alternativ kann dies automatisiert geschehen. Beispielsweise umfassen die Haftmittel eine Saug- beziehungsweise Unterdruckanordnung zur Fixierung des Kontaktgliedes an dem Gegenabschnitt beziehungsweise zur Bewegung der Manipulatoreinheit entlang des Gegenabschnitts wie einer Wand oder eines Bodens. Die Manipulatoreinheit kann sich damit ggf. sogar an überhängenden Wandabschnitten halten und/oder daran entlangbewegen.

Darüber hinaus kann vorteilhafterweise mit den Haftmitteln ein Gegenstand mit einem oder mehreren Kontaktgliedern gegriffen, bewegt und/oder positionsfest relativ zur Manipulatoreinheit gehalten werden. Der Manipulatorarm ist vorteilhaft derart ausgestaltet, dass ein von wenigstens einem Kontaktglied gehaltener Gegenstand vorteilhaft von dem Manipulatorarm bearbeitet bzw. untersucht bzw. z. B. eine Materialprobe des Gegenstandes genommen werden kann.

Vorteilhaft ist es außerdem, wenn Sensormittel zur sensorischen Erfassung der Umgebung der Manipulatoreinheit vorgesehen sind. Damit lassen sich unterschiedlichste Daten aus der Umgebung der Manipulatoreinheit erfassen, um Rückschlüsse auf die Beschaffenheit der Umgebung zu ermöglichen, insbesondere online und sofort bzw. zeitnah.

Die Sensormittel sind uneingeschränkt zu verstehen und können unterschiedliche bzw. sämtliche bekannten Mittel zur Erfassung und Verarbeitung von Parametern in der Umgebung der Manipulatoreinheit umfassen. Darin eingeschlossen sind insbes. Sensoren zur qualitativen und/oder quantitativen Erfassung von radioaktiver Strahlung, der Temperatur, des Drucks, des pH-Wertes und anderer physikalischer oder chemischer Größen in einem gasförmigen oder flüssigen Umgebungsmedium bzw. von Gegenständen in der Umgebung der Manipulatoreinheit.

Gemäß einer bevorzugten Modifikation sind neben der Hubanordnung zusätzliche Antriebsmittel zu angetriebenen Bewegungen der Manipulatoreinheit im die Manipulatoreinheit umgebenden Medium vorgesehen. Die zusätzlichen Antriebsmittel sind neben den angetriebenen Kontaktglieder vorhanden, welche ebenfalls eine angetriebene Bewegung ermöglichen. Insbesondere kann die an den Zugelementen pendelartig bzw. frei hängende Manipulatoreinheit mit den zusätzlichen Antriebsmitteln in Richtung quer zur Vertikalen bewegt werden. Die Vertikalbewegung der Manipulatoreinheit nach unten und oben erfolgt insbesondere über die sich verlängernden und verkürzenden Zugelementen mit der Hubanordnung. Mit den zusätzlichen Antriebsmitteln kann die Manipulatoreinheit z. B. ausreichend nahe an eine Wand heranbewegt werden, so dass die Manipulatoreinheit auf die Wand einwirken kann, insbesondere so dass die Haftmittel mit der Wand in Wirkkontakt gelangen können und die Manipulatoreinheit daran fest positionierbar ist bzw. sich daran entlangbewegen kann. Die Antriebsmittel sind insbesondere dann von Bedeutung, wenn die Wand von einem oberhalb liegenden Zugang, über welchen die Manipulatoreinheit an den Zugelementen hängend senkrecht absenkbar ist, horizontal bzw. lateral weiter beabstandet ist, als mit dem Manipulatorarm bzw. einem Kontaktglied überbrückt werden kann. Dies ist auch dann vorteilhaft, wenn ein Bereich einer Innenwand von hohlzylindrischen, hohlkugelförmigen oder ähnlich geformten hohlen Räumen von der Manipulatoreinheit erreicht werden muss, dieser Bereich von oben jedoch nur über den zur Innenwand horizontal versetzten Zugang zugänglich ist, durch welche die Manipulatoreinheit an den Zugelementen hängend senkrecht abgelassen wird.

Die Antriebsmittel können beispielsweise an dem Grundkörper einen bzw. mehrere antreibbare bzw. rotierende Propeller mit einer zur Senkrechten bzw. zur Längsachse der gespannten Zugelemente schrägen oder quergerichteten Propellerdrehachse umfassen.

Weiter ist vorteilhaft, dass Strahlenschutzmittel vorgesehen sind, welche ein Eindringen von Strahlung von außen in ein Innenvolumen der Manipulatoreinheit reduzieren bzw. vermeiden. Die Strahlenschutzmittel dienen zum Strahlenschutz eines Teils des Innenvolumens der Vorrichtung insbesondere zum Schutz gegen radioaktive Strahlung, um strahlenempfindliche Einrichtungen z. B. Elektronikmittel, die in der Manipulatoreinheit untergebracht sind, gegen die Wirkung der radioaktiven Strahlung zu schützen.

Insbesondere umfassen die Strahlenschutzmittel eine ausreichend dicke Schicht aus Blei, wobei das Blei Röntgen- und Gammastrahlung sehr wirksam absorbiert. Insbesondere umfassen die Strahlenschutzmittel ein Gehäuse aus bzw. mit einem Bleimaterial. Das Bleigehäuse bildet eine gegen Strahlung gekapselte Ausgestaltung von zumindest Bereichen der Vorrichtung.

Der strahlengeschützte Bereich kann beispielsweise außerhalb des Grundkörpers liegen zum Beispiel zwischen den Zugelementen und dem Grundkörper beispielsweise im Bereich der Koppelmittel.

Schließlich ist es auch vorteilhaft, dass Mittel zum Betrieb der Vorrichtung unter Wasser und/oder bei vergleichsweise hohen Temperaturen ausgebildet sind. Die Mittel betreffen insbesondere flüssigkeitsdichte Gehäusematerialien bzw. Dichtanordnungen zur flüssigkeitsdichten Ausbildung z. B. in Verbindungsbereichen von miteinander zu verbindenden Gehäuseteilen bzw. an Verbindungsstellen im Übergang von am Gehäuse angreifenden Komponenten wie z. B. dem Manipulatorarm. Gegen Hitze kommen hoch hitzebeständige Materialien zum Einsatz, die beständig sind bei typischen Maximaltemperaturen, die bei Katastrophenszenarien auftreten können.

Damit ist die Vorrichtung für jegliche denkbaren Katastropheneinsätze vorteilhaft ausgestaltet.

Zusätzlich sind geeignete Maßnahmen zur mechanischen Stabilität der Vorrichtung insbesondere gegen Stoß- bzw. Druckeinwirkung getroffen. Zum Beispiel kann ein Gehäuse mit einer geeigneten hochfesten Außenhaut aus einem Stahlmaterial vorgesehen sein.

### Figurenbeschreibung

Weitere Merkmale und Vorteile der Erfindung sind anhand eines schematisierten Ausführungsbeispiels der Erfindung näher erläutert. Im Einzelnen zeigt:
- Figur 1: in schematisierter perspektivischer Ansicht ein Ausführungsbeispiel einer erfindungsgemäßen Vorrichtung in einer Arbeitsumgebung,
- Figuren 2 bis 4: unterschiedliche Ansichten eines Teils der Vorrichtung gemäß Figur 1 in einem für ein Ablassen oder Anheben der Vorrichtung bevorzugten Zustand,
- Figuren 5 bis 7: unterschiedliche Ansichten eines Teils der Vorrichtung in einer ersten gemäß Figur 1 gezeigten räumlichen Ausrichtung und
- Figuren 8 bis 10: unterschiedliche Ansichten eines Teils der in den Figuren 1 bis 7 gezeigten Vorrichtung in einer für einen Arbeitseinsatz geeigneten zweiten räumlichen Ausrichtung.

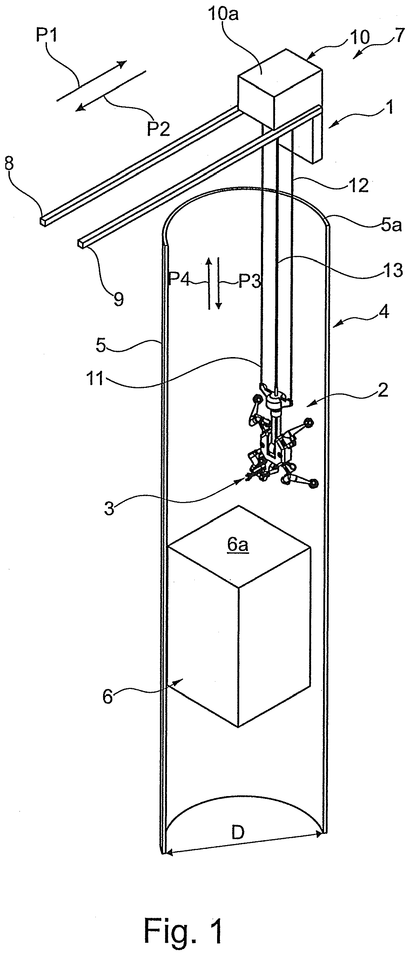

Figur 1 zeigt perspektivisch schräg von oben eine als Arbeitsvorrichtung 1 ausgebildete erfindungsgemäße Vorrichtung mit einer Hubanordnung 7 und einer Manipulatoreinheit 2, welche ein Zwischenstück 19 und einen Grundkörper 18 mit einem antreibbaren Manipulatorarm 3 umfasst.

An Schmalseiten des in der Grundfläche achteckigen Grundkörpers 18 sind außerdem vier gleichartige und jeweils separat motorisch bewegbare Manipulatorbeine 14, 15, 16 und 17 nach außen vorstehend bzw. verstellbar vorhanden. Die Manipulatorbeine 14 und 16 sind gegenüberliegend am Grundkörper 18 positioniert und ebenso die Manipulatorbeine 15 und 17.

Beispielhaft für sämtliche Manipulatorbeine 14, 15, 16 und 17 ist das Manipulatorbein 15 näher erläutert. Das Manipulatorbein 15 weist drei Glieder mit einem gelenkig an dem Grundkörper 18 angreifenden Basisabschnitt 15a, einem am Basisabschnitt 15a gelenkig angreifenden Mittelabschnitt 15b und einen am Mittelabschnitt 15b gelenkig angreifenden Endabschnitt 15c auf. Jedes Glied 15a, 15b und 15c ist separat antreibbar drehbar. Der Basisabschnitt 15a ist zur Drehachse S1 in beide Richtungen gemäß P5 relativ zum Grundkörper 18 drehbar, der Mittelabschnitt 15b ist zur Drehachse S2 in beide Richtungen gemäß P6 relativ zum Basisabschnitt 15a drehbar und der Endabschnitt 15c ist zur Drehachse S3 in beide Richtungen gemäß P7 relativ zum Mittelabschnitt 15b drehbar. Die Drehachsen S2 und S3 sind parallel zueinander und stehen senkrecht zur Drehachse S1. Der Basisabschnitt 15a und der Mittelabschnitt 15b sind im Wesentlichen gerade geformt, wohingegen der Endabschnitt 15c zwei zueinander etwa rechtwinklig ausgerichtete Teilstücke aufweist. Am freien vorderen Ende des Endabschnitt 15c ist ein Saugorgan bzw. Haftglied 28 angeordnet. Das Haftglied 28 dient als Haftmittel zum Anhaften des Manipulatorbeins 15 an einem Gegenabschnitt wie z. B. einer ebenen oder konturierten nahezu beliebig orientierten Wand- oder Bodenfläche. So kann die Manipulatoreinheit 2 durch abgestimmtes bzw. koordiniertes Versetzen der Manipulatorbeine 14, 15, 16 und 17 sich auf bzw. entlang einer Wand- oder Bodenfläche vorwärts bzw. in eine beliebige Richtung bewegen.

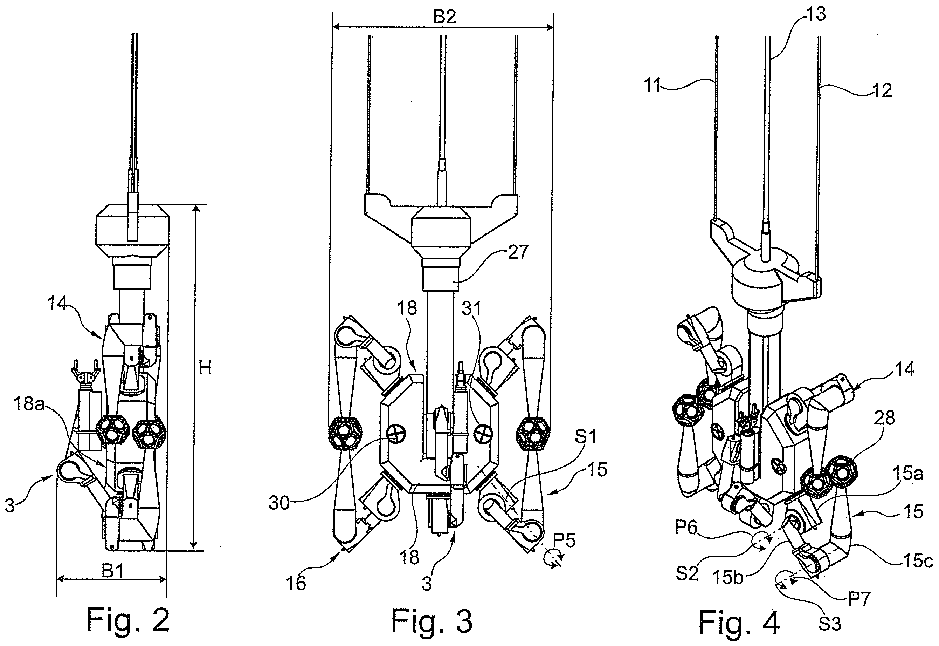

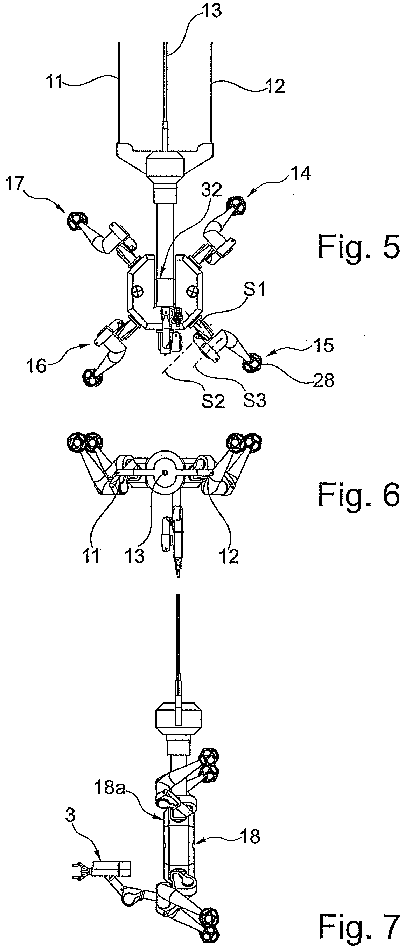

Außerdem können die Manipulatorbeine 14 bis 17 durch eine entsprechende angetriebene Bewegung der Glieder um die Achsen S1 bis S3 aus einer Transportstellung gemäß der Figuren 2 bis 4 in eine Arbeitsstellung gemäß der Figuren 5 bis 7 verstellt werden. In der Transportstellung der Manipulatoreinheit 2 sind die Manipulatorbeine 14 bis 17 kompakt bzw. eng an den Grundkörper herangeklappt, wobei die Außenabmessung der Manipulatoreinheit 2 insgesamt minimiert ist, und eine erste Breite B1 von z. B. ca. 800 Millimeter, eine zweite Breite B2 von z. B. ca. 2000 Millimeter und eine Höhe von z. B. ca. 2500 Millimeter aufweist (s. Fig. 2 und 3), was insbesondere für ein Absenken und Anheben in beengter Umgebung vorteilhaft ist.

Der zwischen den Manipulatorbeinen 15 und 16 ebenfalls an einer Schmalseite des Grundkörpers 18 vorhandene Manipulatorarm 3 ist ähnlich wie der Manipulatorbein 15 aufgebaut und weist eine Armbasis 3a, ein Armmittelteil 3b und ein Werkzeugteil 3c mit einer daran vorne motorisch bewegbaren Zange 29 auf. An dem Manipulatorarm 3 kann ggf. eine gewünschte Werkzeugfunktionalität eingerichtet bzw. ein entsprechendes Werkzeugteil austauschbar angebracht werden, so dass das jeweilige Werkzeug von der Manipulatoreinheit 2 antreibbar ist und in der Nahumgebung der Manipulatoreinheit 2 Arbeitsvorgänge ausführen kann.

Die Arbeitsvorrichtung 1 kann insbesondere aus der Ferne bzw. von einem Ort in sicherer Umgebung (nicht dargestellt), die zu dem in Figur 1 gezeigten Bereich entsprechend ausreichend entfernt und/oder von diesem sicher durch beispielsweise eine Trennwand getrennt ist, z. B. von einer Bedienperson über Bedienmittel bedient werden. Die Bedienmittel können eine Bedientastatur, ein Bedienfeld, ein Touch-Screen, ein Master-Slave-System und/oder einen Joy-Stick oder andere Bedienelemente umfassen. Mit den Bedienmitteln kann die Arbeitsvorrichtung 1 bzw. die Hubanordnung 7 und die Manipulatoreinheit 2 mit dem Manipulatorarm 3 und den Manipulatorbeinen 14 bis 17 insbesondere bewegt, positioniert bzw. ausgerichtet und bedient werden.

Die Arbeitsvorrichtung 1 befindet sich gemäß Figur 1 im Arbeitseinsatz mit der Manipulatoreinheit 2 in einer Arbeitsposition im Inneren eines Behälters 4. Der Behälter 4 weist eine vertikal ausgerichtete Längsachse mit einem zylinderförmigen Mantelrohr 5 auf, das nur teilweise gezeigt bzw. in Längsrichtung und mittig geschnitten dargestellt ist. Der Behälter 4 ist ohne einen Boden und ohne einen Abschnitt gezeigt, der das Innere des Behälters oben ab- bzw. überdeckt z. B. ohne eine Behälterabdeckung, die im Bereich eines oberen Randes 5a des Mantelrohrs 5 anschließt. Die Behälterabdeckung kann insbesondere eine im Durchmesser zu einem Durchmesser D des Mantelrohrs 5 kleinere Öffnung aufweisen, durch welche die Manipulatoreinheit 2 gerade passend von oberhalb der Behälterabdeckung nach unten in Richtung P3 über eine wesentliche Tiefe absenkbar ist. Dabei zeigt Figur 1 die Manipulatoreinheit 2 in einer ersten räumlichen Ausrichtung eines Grundkörpers 18 der Manipulatoreinheit 2.

Im Inneren des Behälters 4 ist ein verbauter Bereich stark abstrahiert als körperlicher Quader 6 mit einer Oberseite 6a gezeigt.

Die Hubanordnung 7 ist als Seilzuganordnung ausgebildet und umfasst einen Laufwagen 10 mit einem Gehäuse 10a mit darin aufgenommenen motorisch drehbaren Seil- und Kabeltrommeln (nicht ersichtlich) zum Auf- und Abwickeln von zwei an jeweils an einer Seiltrommel angreifenden Zugseilen 11 und 12 und einem dazwischen vorhandenen Versorgungskabel 13 zur Energie- und Signalversorgung der Manipulatoreinheit 2. Das Versorgungskabel 13 wird über eine Kabeltrommel im Gehäuse 10a entsprechend den Zugseilen 11, 12 gleichzeitig auf- und abgewickelt.

Der Laufwagen 10 ist über zwei horizontal parallel verlaufende, abgeschnitten gezeigte Laufschienen 8 und 9 angetrieben verschieblich in horizontaler Richtung gemäß der Pfeile P1 und P2. Eine von außen kommende Energie- und Steuersignalzuführung zur Hubanordnung 7 für die Antriebe des Laufwagens 10, der Seil- und Kabeltrommeln bzw. für die Energie- und Signalversorgung zur Weiterleitung über das Versorgungskabel 13 ist nicht dargestellt bzw. kann ggf. über die Laufschienen 8 und 9 erfolgen.

Mit den Seil- und Kabeltrommeln werden die beiden Zugseile 11, 12 und das Versorgungskabel 13 je nach Drehrichtung der Trommeln in Richtung P3 abgesenkt beziehungsweise in Richtung P4 angehoben.

Die Figuren 2 bis 4 zeigen die Manipulatoreinheit 2 in der für ein Absenken beziehungsweise Anheben gemäß der Pfeile P3 und P4 vorteilhaften Transportstellung an den gespannten Zugseilen 11, 12 angehängt. Dabei zeigen die Figuren 2 und 3 zueinander um 90 Winkelgrade gedrehte Seitenansichten und Figur 4 eine perspektivische Ansicht schräg von oben. Eine flächige Hauptseite bzw. Hauptebene 18a des Grundkörpers 18 ist dabei vertikal ausgerichtet (s. Fig. 2), parallel zu den gespannten Zugseilen 11 und 12.

Die Figuren 5 bis 7 zeigen bei unveränderter vertikaler Ausrichtung der Hauptebene 18a des Grundkörpers 18 die Arbeitsvorrichtung 1 in der Arbeitsstellung gemäß Figur 1 insbesondere für ein Arbeiten an einer senkrechten oder dazu etwas geneigten Wandfläche wie zum Beispiel einer Innenwand des Mantelrohrs 5. In dieser Arbeitsstellung ist der Manipulatorarm 3 gegenüber der Transportstellung vom Grundkörper 18 weggeschwenkt und die Manipulatorbeine 14 bis 17 sind gleichartig ausgeklappt, wobei die Figuren 5 und 7 zwei um 90 Winkelgrade um die Vertikale gedrehte Seitenansichten und Figur 6 eine Perspektivansicht von oben betrifft.

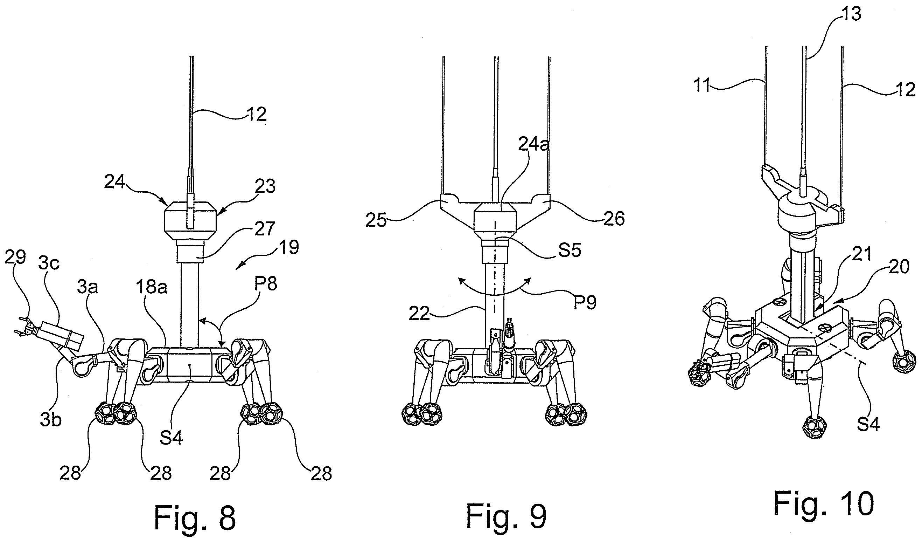

Die Figuren 8 bis 10 zeigen schließlich die Arbeitsvorrichtung 1 in einer weiteren Arbeitsstellung in einer Ausrichtung des Grundkörpers 18 für ein Arbeiten beispielsweise auf einer horizontalen oder etwas geringfügig zur Horizontalen geneigten Bodenfläche wie der Oberseite 6a des Quaders 6. Figur 8 betrifft eine erste Seitenansicht, Figur 9 eine dazu um 90° um die Vertikale gedrehte Ansicht und Figur 10 eine perspektivische Ansicht schräg von oben.

Gemäß der Figuren 8 bis 10 ist der Grundkörper 18 bzw. dessen oberseitige Hauptebene 18a gegenüber der Anordnung gemäß der Figuren 5 bis 7 um 90° um eine horizontale Achse gekippt bzw. gedreht ausgerichtet. Die Haftglieder 28 der Manipulatorbeine 14 bis 17 liegen dabei mit ihrem jeweiligen tiefsten Punkt auf einer gemeinsamen Ebene, beispielsweise zur Abstützung bzw. zur Aufstellung der Arbeitsvorrichtung 1 auf der Oberseite 6a.

Zwischen dem Versorgungskabel 13 bzw. den Zugseilen 11 und 12 und dem Grundkörper 18 der Manipulatoreinheit 2 sind Koppelmittel mit dem Zwischenstück 19 vorhanden. Die Koppelmittel weisen ein am Grundkörper 18 angreifendes längliches hier beispielhaft vierkantförmiges Stabelement 22 und eine Aufnahme 23 mit einer Kapsel 24 und daran gegenüberliegend abstehenden Stegen 25 und 26 auf. An der Kapsel 24 ist ein Einsteckabschnitt 27 für einen Eingriff des oberen Endes des Stabelements 22 vorgesehen.

Zwischen dem Stabelement 22 und dem Grundkörper 18 wirkt eine Verstellanordnung 20 mit einem Gelenk 21 zum Verstellen der räumlichen Ausrichtung des Grundkörpers 18 bzw. dessen Hauptebene 18a relativ zum Stabelement 22 gemäß des Doppelpfeils P8 um eine insbesondere horizontale Achse S4 (s. Fig. 8), welche im Bereich des Schwerpunkts des Grundkörpers 18 verläuft. Das Stabelement 22 samt dem daran angreifenden Grundkörper 18 sind um eine vertikale Achse S5 gemäß des Doppelpfeils P9 (s. Fig. 9) um ca. 360 Winkelgrade verstellbar, was insbes. motorisch über die Kontrolleinheit kontrolliert erfolgt.

In der gemäß der Figuren 1 bis 7 gezeigten vertikalen Ausrichtung der Hauptebene 18a ist das Stabelement 22 platzsparend an der Manipulatoreinheit 2 angeordnet. Demgemäß ist eine auf die Form des Stabelements 22 abgestimmte rechteckige Aussparung 32 am Grundkörper 18, vorteilhaft gegenüberliegend zum Manipulatorarm 3, vorhanden, so dass ein unterer Teil des Stabelements 22 fluchtend innerhalb einer Hüllfläche des Grundkörpers 18 in der nicht abgekippten räumlichen Ausrichtung des Grundkörpers 18 relativ zum Stabelement 22 unterbringbar ist.

An der Kapsel 24 greift zudem das Versorgungskabel 13 an. In der Kapsel 24 sind neben anderen Elementen Elektronikkomponenten untergebracht, welche gegen Strahlung von außen mit einem Strahlenschutzgehäuse geschützt sind, insbesondere durch ein Gehäuse 24a bzw. mit einer Gehäuseschicht aus Blei bzw. mit einem Bleimantel.

Das Stabelement 22 ist insbesondere hohl und kann weitere Elemente der Manipulatoreinheit 2 umfassen. Zwischen dem unteren Ende des Stabelements 22 und dem Grundkörper 18 der Manipulatoreinheit 2 wirkt das Gelenk 21.

Für eine angetrieben Bewegung im die Manipulatoreinheit 2 umgebenden Medium wie Luft oder Wasser sind im Grundkörper 18 zwei motorisch angetrieben rotierbare Propeller 30, 31 vorhanden.

### Bezugszeichenliste:

- 1: Arbeitsvorrichtung
- 2: Manipulatoreinheit
- 3: Manipulatorarm
- 3a: Armbasis
- 3b: Armmittelteil
- 3c: Werkzeugteil
- 4: Behälter
- 5: Mantelrohr
- 5a: Rand
- 6: Quader
- 6a: Oberseite
- 7: Hubanordnung
- 8, 9: Laufschiene
- 10: Laufwagen
- 10a: Gehäuse
- 11, 12: Zugseil
- 13: Versorgungskabel
- 14-17: Manipulatorbein
- 15a: Basisabschnitt
- 15b: Mittelabschnitt
- 15c: Endabschnitt
- 18: Grundkörper
- 18a: Hauptebene
- 19: Zwischenstück
- 20: Verstellanordnung
- 21: Gelenk
- 22: Stabelement
- 23: Aufnahme
- 24: Kapsel
- 24a: Gehäuse
- 25, 26: Steg
- 27: Einsteckabschnitt
- 28: Haftglied
- 29: Zange
- 30, 31: Propeller
- 32: Aussparung

## Patentansprüche

1. Vorrichtung (1) mit einer Manipulatoreinheit (2), welche einen antreibbaren Manipulatorarm (3) an einem Grundkörper (18) der Manipulatoreinheit (2) umfasst, wobei eine Hubanordnung (7) mit mehreren separaten flexiblen Zugelementen (11, 12) vorhanden ist, an welcher die Manipulatoreinheit (2) frei anhängend absenkbar und/oder anhebbar ist, wobei zwischen den flexiblen Zugelementen (11, 12) und dem Grundkörper (18) der Manipulatoreinheit (2) wirkende Koppelmittel (19) derart vorhanden sind, dass im angehängten Zustand der Manipulatoreinheit (2) an den Zugelementen (11, 12) der Grundkörper (18) verstellbar ist, um eine vordefinierte räumliche Ausrichtung des Grundkörpers (18) einzustellen, **dadurch gekennzeichnet, dass** eine Hauptebene (18a) der Manipulatoreinheit von einer vertikalen Ausrichtung in eine horizontale Ausrichtung durch eine Kippbewegung kippbar ist, wobei die Hauptebene (18a) eine Flächenseite des Grundkörpers (18) ist.

2. Vorrichtung nach Anspruch 1, **dadurch gekennzeichnet, dass** die Koppelmittel (19) ein mit den Zugelementen (11, 12) verbundenes zumindest im Wesentlichen starres Koppelelement (22) umfassen.

3. Vorrichtung nach einem der vorhergehenden Ansprüche, **dadurch gekennzeichnet, dass** die Koppelmittel (19) über eine Verstellanordnung (20) an der Manipulatoreinheit (2) angreifen.

4. Vorrichtung nach einem der vorhergehenden Ansprüche, **dadurch gekennzeichnet, dass** die Verstellanordnung (20) im Bereich eines Schwerpunkts der Manipulatoreinheit (2) insbesondere im Bereich eines Schwerpunkts des Grundkörpers (18) der Manipulatoreinheit (2) vorhanden ist.

5. Vorrichtung nach einem der vorhergehenden Ansprüche, **dadurch gekennzeichnet, dass** an der Manipulatoreinheit (2) mehrere angetrieben bewegbare Kontaktglieder (14-17) vorhanden sind.

6. Vorrichtung nach einem der vorhergehenden Ansprüche, **dadurch gekennzeichnet, dass** ein Kontaktglied (14-17) mit einer Funktionalität ausgebildet ist.

7. Vorrichtung nach einem der vorhergehenden Ansprüche, **dadurch gekennzeichnet, dass** an einem Kontaktglied (14-17) Haftmittel (28) zur Einrichtung einer Haltefunktion zwischen dem Kontaktglied (14-17) und einem Gegenabschnitt (6a) vorhanden sind.

8. Vorrichtung nach einem der vorhergehenden Ansprüche, **dadurch gekennzeichnet, dass** Sensormittel zur sensorischen Erfassung der Umgebung der Manipulatoreinheit (2) vorgesehen sind.

9. Vorrichtung nach einem der vorhergehenden Ansprüche, **dadurch gekennzeichnet, dass** neben der Hubanordnung (7) Antriebsmittel (30, 31) zur angetriebenen Bewegung der Manipulatoreinheit (2) im die Manipulatoreinheit (2) umgebenden Medium vorgesehen sind.

10. Vorrichtung nach einem der vorhergehenden Ansprüche, **dadurch gekennzeichnet, dass** Strahlenschutzmittel (24a) vorgesehen sind, welche ein Eindringen von Strahlung von außen in ein Innenvolumen der Manipulatoreinheit (2) reduzieren bzw. vermeiden.

11. Vorrichtung nach einem der vorhergehenden Ansprüche, **dadurch gekennzeichnet, dass** Mittel zum Betrieb der Vorrichtung unter Wasser und/oder bei vergleichsweise hohen Temperaturen ausgebildet sind.

## Claims

1. Device (1) with a manipulator unit (2) which comprises a driveable manipulator arm (3) on a main body (18) of the manipulator unit (2), wherein a lifting arrangement (7) with a plurality of separate flexible pulling elements (11, 12) is provided, on which lifting arrangement the manipulator unit (2) can be lowered and/or raised in a freely suspended manner, wherein coupling means (19) acting between the flexible pulling elements (11, 12) and the main body (18) of the manipulator unit (2) are provided such that in the suspended state of the manipulator unit (2) on the pulling elements (11, 12) the main body (18) is adjustable in order to set a predefined spatial orientation of the main body (18), **characterised in that** a main plane (18a) of the manipulator unit can be tilted from a vertical orientation into a horizontal orientation by a tilting movement, wherein the main plane (18a) is a surface side of the main body (18).

2. Device according to claim 1, **characterised in that** the coupling means (19) comprise a substantially rigid coupling element (22) connected to the pulling elements (11, 12).

3. Device according to any of the preceding claims, **characterised in that** the coupling means (19) act on the manipulator unit (2) via an adjustment arrangement (20).

4. Device according to any of the preceding claims, **characterised in that** the adjustment arrangement (20) is provided in the area of a centre of gravity of the manipulator unit (2), in particular in the area of a centre of gravity of the main body (18) of the manipulator unit (2).

5. Device according to any of the preceding claims, **characterised in that** on the manipulator unit (2) a plurality of contact members (14-17) are provided that are moveable in a driven manner.

6. Device according to any of the preceding claims, **characterised in that** a contact member (14-17) is designed with a functionality.

7. Device according to any of the preceding claims, **characterised in that** on a contact member (14-17) adhesive means (28) are provided for establishing a holding function between the contact member (14-17) and a mating section (6a).

8. Device according to any of the preceding claims, **characterised in that** sensor means are provided for the sensory detection of the surroundings of the manipulator unit (2).

9. Device according to any of the preceding claims, **characterised in that** in addition to the lifting arrangement (7), driving means (30, 31) are provided for the driven movement of the manipulator unit (2) in the medium surrounding the manipulator unit (2).

10. Device according to any of the preceding claims, **characterised in that** radiation protection means (24a) are provided which reduce or avoid the penetration of radiation from the outside into an internal volume of the manipulator unit (2).

11. Device according to any of the preceding claims, **characterised in that** means are provided for operating the device underwater and/or at comparatively high temperatures.

## Revendications

1. Dispositif (1) avec une unité de manipulation (2) qui comprend sur un corps de base (18) de l'unité de manipulation (2) un bras de manipulation (3) pouvant être entraîné, un dispositif de levage (7) avec plusieurs éléments de traction flexibles (11, 12) séparés étant présent sur lequel l'unité de manipulation (2) librement suspendue peut être abaissée et/ou soulevée, des moyens de couplage (19) étant présents entre les éléments de traction flexible (11, 12) et le corps de base (18) de l'unité de manipulation (2) de telle sorte que, à l'état suspendu de l'unité de manipulation (2) sur les éléments de traction (11, 12), le corps de base (18) peut être réglé afin de régler une orientation spatiale prédéterminée du corps de base (18), **caractérisé en ce qu'**un plan principal (18a) de l'unité de manipulation peut basculer d'une orientation verticale dans une orientation horizontale par un mouvement de basculement, le plan principal (18a) étant un côté plat du corps de base (18).

2. Dispositif selon la revendication 1, **caractérisé en ce que** les moyens de couplage (19) comprennent un élément de couplage (22) au moins sensiblement rigide relié aux éléments de traction (11, 12).

3. Dispositif selon l'une des revendications précédentes, **caractérisé en ce que** les moyens de couplage (19) sont en prise avec l'unité de manipulation (2) par le biais d'un dispositif de réglage (20).

4. Dispositif selon l'une des revendications précédentes, **caractérisé en ce que** le dispositif de réglage (20) est présent dans la zone d'un centre de gravité de l'unité de manipulation (2), en particulier dans la zone d'un centre de gravité du corps de base (18) de l'unité de manipulation (2).

5. Dispositif selon l'une des revendications précédentes, **caractérisé en ce que** plusieurs organes de contact (14-17) mobiles et entraînés sont présents sur l'unité de manipulation (2).

6. Dispositif selon l'une des revendications précédentes, **caractérisé en ce qu'**un organe de contact (14-17) est conçu avec une fonctionnalité.

7. Dispositif selon l'une des revendications précédentes, **caractérisé en ce que** des moyens adhésifs (28) sont présents sur un organe de contact (14-17) pour établir une fonction de maintien entre l'élément de contact (14-17) et une section conjuguée (6a).

8. Dispositif selon l'une des revendications précédentes, **caractérisé en ce que** des moyens capteurs sont prévus pour la détection sensorielle de l'environnement de l'unité de manipulation (2).

9. Dispositif selon l'une des revendications précédentes, **caractérisé en ce que,** outre le dispositif de levage (7), des moyens d'entraînement (30, 31) sont prévus pour le mouvement entraîné de l'unité de manipulation (2) dans le milieu entourant l'unité de manipulation (2).

10. Dispositif selon l'une des revendications précédentes, **caractérisé en ce que** des moyens de radioprotection (24a) sont prévus, lesquels réduisent ou empêchent la pénétration de rayonnement de l'extérieur dans un volume interne de l'unité de manipulation (2).

11. Dispositif selon l'une des revendications précédentes, **caractérisé en ce que** des moyens sont prévus pour faire fonctionner le dispositif sous l'eau et/ou à des températures comparativement élevées.
